# EUROPEAN PATENT SPECIFICATION

(11) **EP 0 889 772 B1**
(45) Date of publication and mention of the grant of the patent: **26.03.2003**
(21) Application number: 97946834.5
(22) Date of filing: 20.11.1997
(51) Int. Cl.: B28B 1/00

(54) **METHOD AND APPARATUS FOR FORMING A CONCRETE BLOCK**
VERFAHREN UND VORRICHTUNG ZUM HERSTELLEN VON ZEMENTBLÖCKEN
PROCEDE ET DISPOSITIF DE MISE EN FORME DE BLOCS DE BETON

(30) Priority: 20.11.1996 SG 9611324
(43) Date of publication of application: 13.01.1999
(73) Proprietor: Lazar, Michael, Singapore 730214 (SG); Ang, Thiam Seng, Singapore 550504 (SG)
(72) Inventor: Lazar, Michael, Singapore 730214 (SG); Ang, Thiam Seng, Singapore 550504 (SG)
(74) Representative: Stenger, Watzke & Ring Patentanwälte
(86) International application number: SG9700059
(87) International publication number: WO98022269

(56) References cited:
- EP-A- 0 097 213
- CH-A- 687 871
- GB-A- 2 159 556
- ZEMENT UND BETON, 30th Edition, 1996/97, ZEMENT + BETON HANDELS- UND WERBE-GMBH, VIENNA, page 110.
- BETONWERK + FERTIGTEIL-TECHNIK, No. 2, 1997, J. HEGGER et al., "Hochleistungsbeton im Fertigteilbau", page 82.

## Description

The present invention relates to a method and apparatus for forming a concrete block particularly, but not exclusively, a composite block having a base portion and a reflective facia portion.

Throughout the specification and claims, use of the word "block" is to be taken as including, for example, a kerb stone, road divider or paver constructed wholly or in part of concrete or like substance.

A form of composite block is disclosed in GB2159556A. Such a block includes a base portion and a reflective facia portion, and is formed by placing a base mix and facia mix in a mould and compressing same to remove excess water.

Another concrete block, in the form of a kerb stone, is disclosed in GB2200936. The kerb stone includes reflective material and is formed by randomly mixing the reflective material with fluid concrete, or pressing the material into the concrete when the kerb stone is partially cured.

Both of the above known forms of concrete block are manufactured by a wet casting technique and curing of the blocks can take a considerable time, in the order of three days. A method and an apparatus for forming a composite block is disclosed in EP 0 097 213 A.

It is an object of the present invention to provide a method and apparatus for forming a block which utilises a dry casting technique. To the applicants knowledge, dry casting has never been used to manufacture kerb stones for the reason that it is generally considered that dry casting would result in a block of inferior strength and durability and that the wet casting method was prescribed in order to meet the requirements for kerb stones, as set out under British Standard BS 7263:Part 1:1990, published by British Standards Institution, London. The present invention, however, utilises dry casting, in combination with a compacting step whereby the resultant block is capable of meeting the requirements of BS 6717: Part 1: 1993.

In accordance with the present invention there is provided a method of forming a concrete block comprising preparing a base mix, having a water/cement ratio of less than or substaittially equal to 0.35, pouring the base mix into a mould and pressurising the mix by application of a vibro-compaction force, wherein a facia mix is poured into the mould prior to application of the compaction force whereby both the base mix and facia mix are pressurised, and wherein the base mix is compressed prior to application of the compaction force so as to create a recess defined by the base mix and the mould, into which the facia mix is poured.

Preferably the facia mix includes reflective material. Alternatively, the facia mix is provided on a surface thereof with reflective material prior to compaction.

Preferably, a binding agent is provided between the base mix and facia mix prior to compaction.

Preferably the base mix is subjected to vibration prior to application of the compaction force so as to enhance filling of the mould and subsequent compaction.

Preferably preparing the base mix includes mixing cement with granite chips, not exceeding 9mm in diameter, and sand particies not exceeding 5mm in diameter, to enhance binding properties of the block.

In another aspect, there is provided an apparatus for effecting the above method including:
mixing means for mixing a base mix and a facia mix;
a mould assembly including a mould and a feeder for receiving the base mix and facia mix and transferring the base mix and facia mix into the mould; and
a ram device for applying a compaction force to the mix held in the mould.

Preferably the mould assembly includes a vibration device for vibrating the mould to enhance filling of the mould and subsequent compaction.

Preferably the ram device is adapted for application of a vibro compaction force.

Preferably the feeder includes two portions for holding, respectively, the base mix and facia mix, the feeder being arranged such that the portions are adapted to be alternately displaced over the mould for separate dispensing of the base mix and facia mix within the mould.

In another aspect, there is provided a concrete block formed in accordance with the above described method.

The invention is more fully described, by way of non-limiting example only, with reference to the accompanying drawings, in which:
Figure 1 is a perspective view of a mixing assembly;
Figure 2 is a perspective view of a mould assembly;
Figure 3a is an isometric view of a composite block;
Figure 3b is a side view of the block of Figure 3a;
Figure 3c is a plan view of the block of Figure 3a and 3b; and
Figure 4 is a perspective view showing part of an apparatus used for batching blocks, formed in accordance with the present invention.

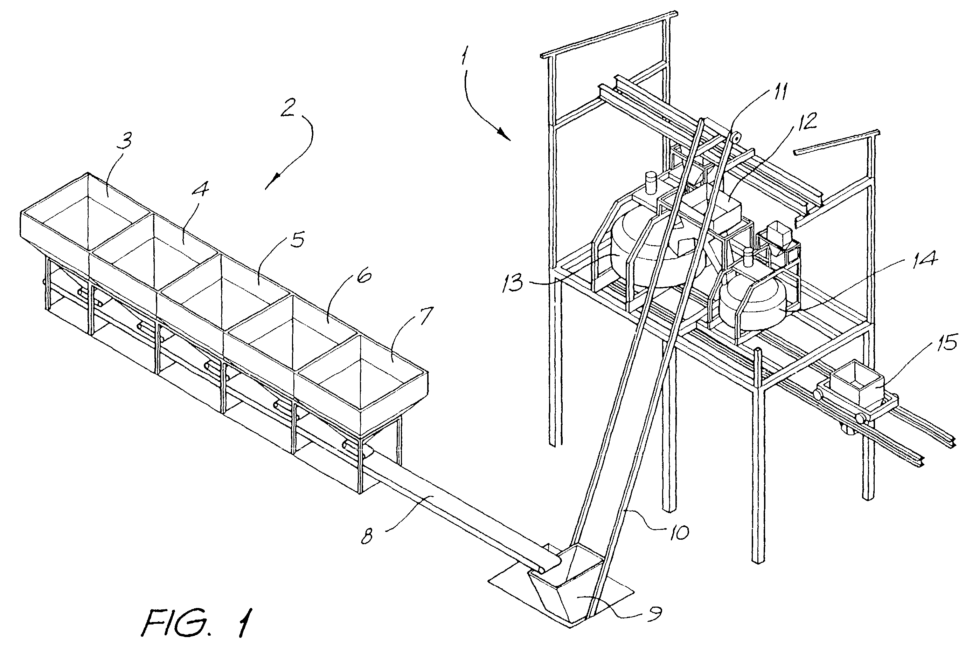

A mixing assembly 1 is shown in Figure 1, together with a supply assembly 2 which is arranged to supply component material to the mixing assembly.

The supply assembly 2 includes a number of hoppers 3 to 7 arranged to dispense component materials onto a main conveyor 8 which transports the materials to a skip 9. The skip 9 is itself arranged to travel along a track 10 which causes the skip to invert at the upper end 11 thereof so as to discharge the materials in an input hopper 12 of the mixing assembly 1. The materials in the hopper are transferred into either a first mixing device 13 for a base mix or a second mixing device 14 for a facia mix.

In one mode of production, hoppers 2, 3 and 5 contain granite chippings, course sand and fine sand, respectively. Hopper 6 would contain silica sand and hopper 7 could contain glass beads. Component material for a base mix could then be obtained by dispensing pre-determined quantities of chippings and sand from hoppers 3 to 5 and transferring these into the mixing device 13 for the base mix via the conveyor 8 and skip 9. Component material for the facia mix may similarly be obtained by discharging a pre-determined amount of material from hoppers 5 to 7 and transferring same into the mixing device 14 for the facia mix.

The base mix preferably includes the following components:

| **Description of raw materials** | **Quantity** |
|---|---|
| Ordinary Portland Cement | 20% of the weight of sand and aggregates |
| Fine Sand 0.1 to 3mm | 08% |
| Sand 0.4 to 0.5mm | 60% |
| 5-9mm granite chips | 32% |
| Additive | 2 to 3% of cement weight |
| Water/Cement ratio | 30 kgs (0.28 to 0.35) |

The facia mix preferably includes the following components, including reflective elements which are used to create a resultant layer not less that 8mm on the blocks:

| **Description of raw materials** | **Quantity** |
|---|---|
| Silica Sand | 50% |
| Fine sand 0.1 to 3mm | 10% |
| White chips | 10% |
| White cement | 30% |
| White pigment (Titamum dioxide) | 5 to 7% of the cement weight |
| or Yellow Pigment | 7 to 9% of the cement weight |
| or Red Pigment | 5 to 7% of the cement weight |
| Glass beads 250 - 800 microns | 20% to 35% of total mix |
| Additive or binding agent | 5% of the cement weight |
| Water/Cement ratio | 30 kgs (0.28 to 0.35) |

The cement, water and other component materials not provided for by the hoppers 3 to 7 may be added directly at the mixing assembly, either automatically or manually.

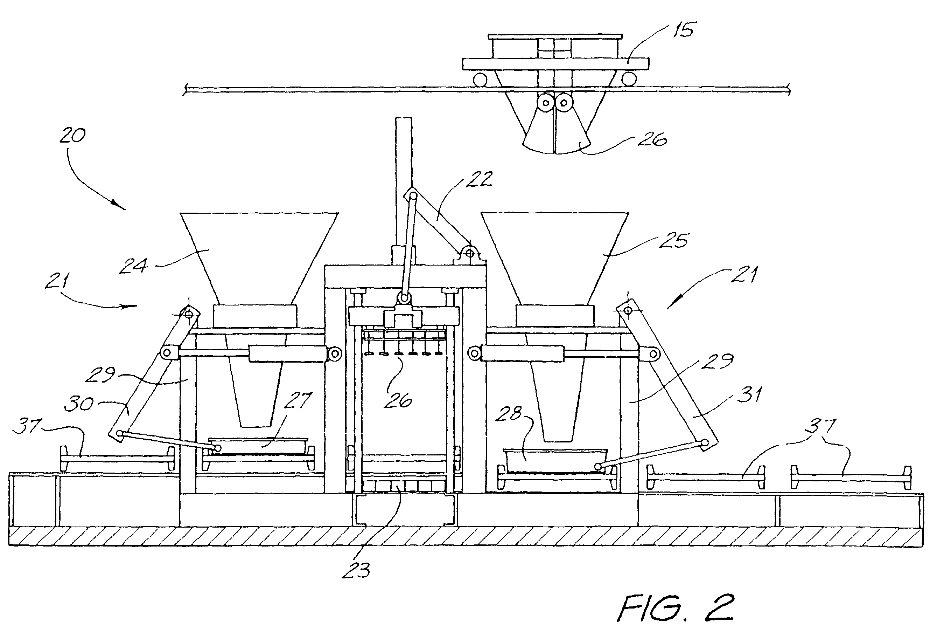

The supply assembly and mixing assembly is preferably operated so as to produce a base mix and face mix alternately. When mixing of either the base mix or facia mix is complete, the resultant mix is discharged into a bucket conveyor 15 which is adapted to move between outputs (not shown) of the mixing devices and the mould assembly 20 shown in Figure 2. As an alternative to the bucket conveyor, a belt conveyor could instead be used or the mixing assembly arranged to discharge the mix directly to the mould assembly.

The mould assembly 20 includes a feeder mechanism 21, a ram device 22 and a mould 23. The feeder mechanism 21 includes two feed hoppers 24, 25 positioned on either side of an hydraulically operated ram head 26 of the ram device 22, which is in turn located above the mould 23. The feeder also includes a tray portion 27, 28 positioned beneath a respective hopper 24, 25. The tray portions are interconnected to a frame 29 of the mould assembly 20 by articulated arms 30, 31 which allow the portions 27, 28 to slide from a discharging position over the mould to a laterally displaced position beneath a respective hopper 24, 25.

In operation, the bucket conveyor 15 moves from the mixing assembly 1 to the mould assembly 20 and is positioned over either feed hopper 24 or 25, depending upon the mix carried by the bucket conveyor. A shutter mechanism 26 is actuated in the bottom of the bucket conveyor to discharge the mix into the respective hopper. The mix is then dispensed on to the associated tray portion 27, 28 which is subsequently caused to slide over the mould whereupon to discharge the mix into the mould.

The mould assembly is also provided with a vibration device (not shown) which is then actuated to impart vibrationary motion to the mould to help facilitate filling of the mould and enhance compaction. The ram head is then lowered into the mould to marginally compact the base mix so as to leave a cavity of approximately 15mm between the top of the mould and the base mix. The filling process, vibration and initial compaction takes about 10 seconds to complete. The ram head is then raised and facia mix which has previously been discharged into tray portion 28, is deposited on top of the base mix, together with reflective material. If required, additives and additional binding agents may be provided in the cavity prior to addition of the facia mix. The ram head is again lowered and a vibro-compaction force exerted to compress the base and facia mix. The hydraulics of the ram head are preferably operable to provide simple harmonic vibrations of up to 3,600 rpm's, with a maximum compression pressure exerted on the block mix in the order of 120 bars. Filling the mould with the face mix takes about 4 seconds and the subsequent compaction lasts for about 4 to 6 seconds. The mould assembly is therefore capable of executing about 5 working cycles per minute.

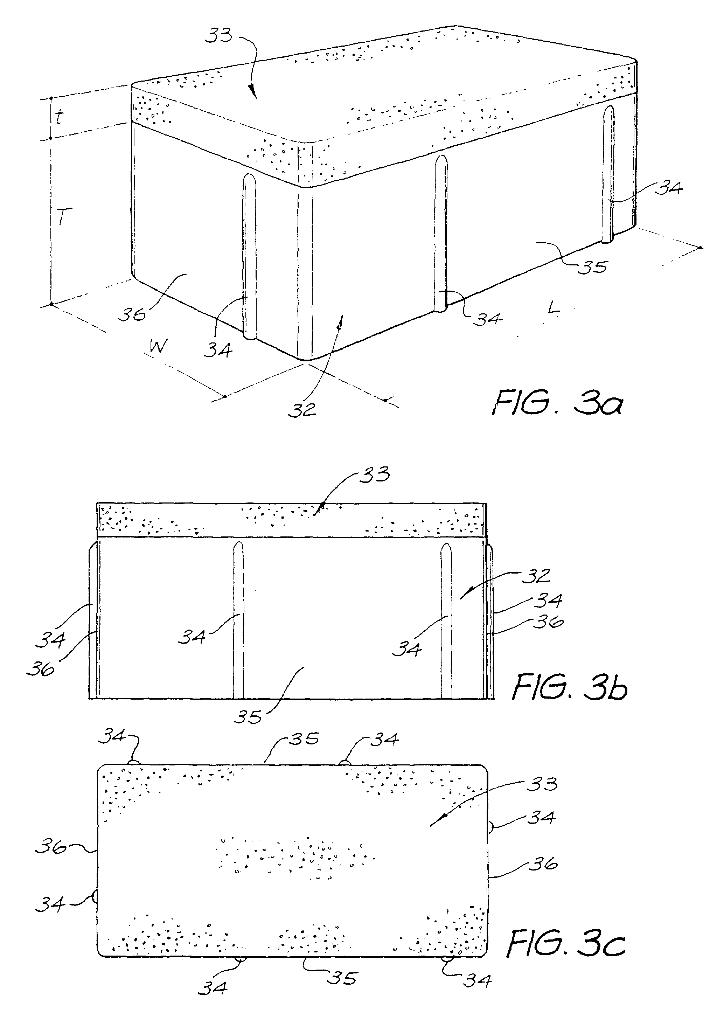

The resultant blocks are demoulded in the form shown in Figure 3, with a compacted base component 32 having a thickness 'T' in the order of, for example, 80mm and a facia component 33 in the order of, for example, not less than 10mm in thickness 't' The length of the block 'L' may be in the order of 200mm arid the width 'W' in the order of 100mm although the particular configuration and block dimensions may be varied as desired.

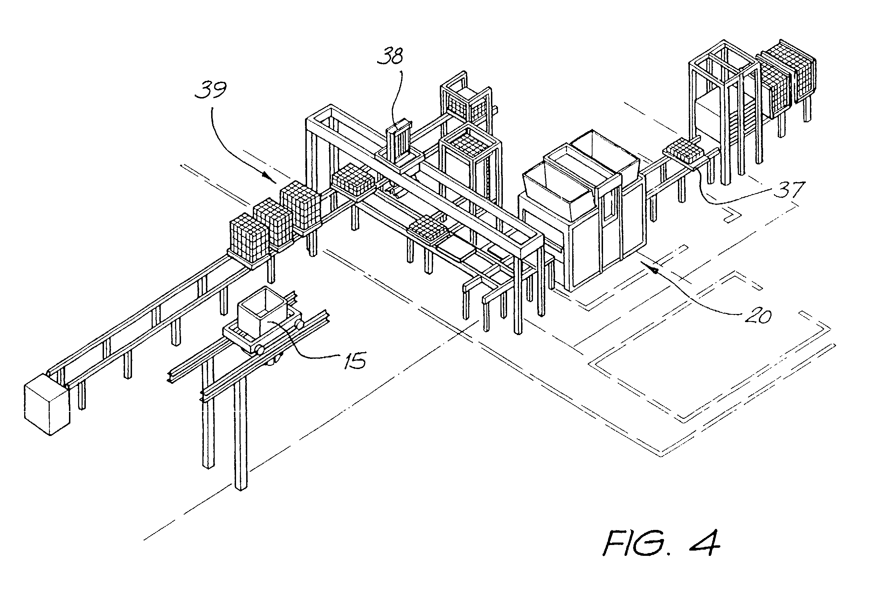

The blocks can be demoulded directly onto a pallet 37, as illustrated in Figure 4, which is transported via conveyor to a rack, for removal by forklift, and placement in a curing chamber. Curing may take 8 to 12 hours, after which the blocks will be solid enough for handling and packing. Packing may be facilitated by passing the pallet beneath a clamping device 38, which clamps the blocks together from four opposing sides, so that the blocks are closely positioned as at location 39 for binding and subsequent packaging.

As can be appreciated, the above mode of operation has been described by way of an automated procedure. However, any of the manufacturing steps may instead be carried out manually. Further, the mould and ram may be constructed to form a single block or plurality of blocks in a single working cycle. The shape and configuration of the blocks may be user specified so that the apparatus can produce blocks for a number of different purposes. For example, a reflective block made in accordance with the present invention, may be used for either directional arrows in a road, divider lines, double yellow or white lines, road humps, numbering or wording, kerbstones or pavers and may be manufactured in any required colour such as white, yellow or red. The blocks may also be made without reflective material, if required.

However, the most significant advantage resides in the blocks being made by utilising a dry casting technique combined with compaction since this allows a substantially shorter curing time, as compared to that associated with wet casting, whilst complying with compressive strength requirements set out in BS 6717: Part 1: 1993, to thereby improve production rates and efficiency.

Finally, it is to be understood that the inventive concept in any of its aspects can be incorporated in many different constructions so that the generality of the preceding description is not to be superseded by the particularity of the attached drawings. Various alterations, modifications and/or additions may be incorporated into the various constructions and arrangements of parts without departing from the subject-matter of the appended claims.

## Claims

1. A method of forming a concrete block comprising preparing a base mix having a water / cement ratio less than or substantially equal to 0.35 pouring the base mix into a mold and pressurizing the mix by application of a vibro-compaction force, wherein a facia mix is poured into the mold prior to application of the compaction force whereby both the base mix and facia mix are pressurized, and wherein the base mix is compressed prior to application of the compaction force so as to create a recess defined by the base mix and the mold into which the facia mix is poured.

2. A method as claimed in claim 1 wherein a binding agent is provided between the base mix and facia mix prior to compaction.

3. A method as claimed in any one of the claims 1 or 2 wherein the facia mix includes reflective material.

4. A method as claimed in any one of the claims 1 or 2 wherein the facia mix is provided on a surface thereof with reflective material prior to compaction.

5. A method as claimed in any one of the preceding claims wherein the base mix is subjected to vibration prior to application of the compaction force so as to enhance filling of the mold and subsequent compaction.

6. A method as claimed in any one of the preceding claims wherein preparing the base mix includes mixing cement with granite chips, not exceeding 9 mm in diameter, and sand particles, not exceeding 5 mm in diameter, to enhance binding properties of the block.

7. An apparatus for performing the method described in any one of the preceding claims including:
mixing means (1,13,14) for mixing a base mix and a facia mix;
a mold assembly (20) including a mold (23) and a feeder (21,24,25) for receiving the base mix and facia mix and transferring the base mix and facia mix into the mold; and
a ram device (22) for applying a compaction force to the mix held in the mold (23).

8. An apparatus as claimed in claim 7 wherein the mold assembly includes a vibration device for vibrating the mold to enhance filling of the mold and subsequent compaction.

9. An apparatus as claimed in claim 7 or 8 wherein the ram device is adapted for application of a vibro compaction force.

10. An apparatus as claimed in any one of the claims 7 to 9 wherein the feeder includes two portions for holding, respectively, the base mix and facia mix, the feeder being arranged such that the portions are on opposite sides of the mold, and are adapted to be alternately displaced over the mold for separate dispensing of the base mix and facia mix within the mold.

## Patentansprüche

1. Verfahren zum Herstellen eines Zementblocks, welches das Herstellen einer Basismischung mit einem Wasser/Zement-Verhältnis von weniger als oder im wesentlichen gleich 0,35, das Einfüllen der Basismischung in eine Pressform und eine Unter-Druck-Setzung der Mischung durch Anwendung einer Vibrationsverdichtungskraft umfasst, wobei eine Oberseitenmischung vor der Ausübung der Verdichtungskraft in die Pressform gefüllt wird, wodurch sowohl die Basismischung als auch die Oberseitenmischung unter Druck gesetzt werden, und wobei die Basismischung vor der Ausübung der Verdichtungskraft derart zusammengepresst wird, dass eine von der Basismischung und der Pressform definierte Vertiefung geschaffen wird, in welche die Oberseitenmischung gegossen wird.

2. Verfahren gemäß Anspruch 1, wobei ein Bindemittel zwischen der Basismischung und der Oberseitenmischung vor der Verdichtung vorgesehen wird.

3. Verfahren gemäß irgendeinem der Ansprüche 1 oder 2, wobei die Oberseitenmischung reflektierendes Material umfasst.

4. Verfahren gemäß irgendeinem der Ansprüche 1 oder 2, wobei die Oberseitenmischung vor der Verdichtung auf ihrer Oberfläche mit reflektierendem Material versehen wird.

5. Verfahren gemäß irgendeinem der vorherigen Ansprüche, wobei die Basismischung vor der Ausübung der Verdichtungskraft einer Vibration unterzogen wird, um das Füllen der Pressform und die nachfolgende Verdichtung zu verbessern.

6. Verfahren gemäß irgendeinem der vorherigen Ansprüche, wobei das Herstellen der Basismischung das Mischen von Zement mit Granitsplittern, deren Durchmesser 9 mm nicht übersteigt, und Sandpartikeln, deren Durchmesser 5 mm nicht übersteigt, umfasst, um die Bindeeigenschaften des Blocks zu verbessern.

7. Vorrichtung zur Durchführung des in irgendeinem der vorherigen Ansprüche beschriebenen Verfahrens, mit:
Mischvorrichtungen (1, 13, 14) zum Mischen einer Basismischung und einer Oberseitenmischung;
einer Pressformanordnung (20), welche eine Pressform (23) und eine Zufuhreinrichtung (21, 24, 25) zur Aufnahme der Basismischung und der Oberseitenmischung und zum Transportieren der Basismischung und der Oberseitenmischung in die Pressform umfasst; und
einer Stößelvorrichtung (22) zum Ausüben einer Verdichtungskraft auf das in der Pressform (23) gelagerte Gemisch.

8. Vorrichtung gemäß Anspruch 7, wobei die Pressformanordnung eine Vibrationsvorrichtung zum Rütteln der Pressform umfasst, um das Füllen der Form und die nachfolgende Verdichtung zu verbessern.

9. Vorrichtung gemäß Anspruch 7 oder 8, wobei die Stößelvorrichtung dafür eingerichtet ist, eine Vibrationsverdichtungskraft auszuüben.

10. Vorrichtung gemäß irgendeinem der Ansprüche 7 bis 9, wobei die Zufuhreinrichtung zwei Bereiche zum jeweiligen Lagern der Basismischung und der Oberseitenmischung umfasst, wobei die Zufuhreinrichtung derart angeordnet ist, dass die Bereiche auf gegenüberliegenden Seiten der Pressform liegen und dafür eingerichtet sind, abwechselnd über die Pressform bewegt zu werden, um die Basismischung und die Oberseitenmischung innerhalb der Pressform getrennt zu verteilen.

## Revendications

1. Procédé pour former un bloc de béton, comprenant la préparation d'un mélange de base avec un rapport eau/ciment inférieur à ou substantiellement égal à 0,35, le versement du mélange de base dans un moule et la mise sous pression du mélange par application d'une force de vibration/compactage, procédé dans lequel on verse un mélange de bandeau dans le moule avant application de la force de compactage, grâce à quoi le mélange de base et le mélange de bandeau sont mis sous pression, et dans lequel le mélange de base est comprimé avant d'appliquer la force de compactage de façon à créer un évidement défini par le mélange de base et par le moule et dans lequel est versé le mélange de bandeau.

2. Procédé selon la revendication 1, dans lequel un agent liant est prévu entre le mélange de base et de mélange de bandeau avant le compactage.

3. Procédé selon l'une ou l'autre des revendications 1 et 2, dans lequel le mélange de bandeau inclut un matériau réflecteur.

4. Procédé selon l'une ou l'autre des revendications 1 et 2, dans lequel le mélange de bandeau est pourvu sur une surface de lui-même d'un matériau réflecteur avant le compactage.

5. Procédé selon l'une quelconque des revendications précédentes, dans lequel le mélange de base est soumis à une vibration avant l'application de la force de compactage, de façon à améliorer le remplissage du moule et le compactage ultérieur.

6. Procédé selon l'une quelconque des revendications précédentes, dans lequel la préparation du mélange de base inclut le mélange de ciment avec des plaquettes de granit, ne dépassant pas 9 mm de diamètre, et des particules de sable, ne dépassant pas 5 mm de diamètre, pour améliorer les propriétés liantes du bloc.

7. Appareil pour mettre en oeuvre le procédé décrit dans l'une quelconque des revendications précédentes, comprenant :
des moyens de mélange (1, 13, 14) pour mélanger mélange de base et mélange de bandeau ;
un ensemble de moule (20), qui inclut un moule (23) et un dispositif d'alimentation (21, 24, 25) pour recevoir le mélange de base et le mélange de bandeau et pour transférer le mélange de base et le mélange de bandeau jusque dans le moule ; et
un dispositif à vérin (22) pour appliquer une force de compactage au mélange contenu dans le moule (23).

8. Appareil selon la revendication 7, dans lequel l'ensemble de moule inclut un dispositif à vibrations pour faire vibrer le moule afin d'améliorer de remplissage du moule et le compactage ultérieur.

9. Appareil selon l'une ou l'autre des revendications 7 et 8, dans lequel le dispositif à vérin est adapté pour l'application d'une force de vibration/compactage.

10. Appareil selon l'une quelconque des revendications 7 à 9, dans lequel le dispositif d'alimentation inclut deux portions pour contenir à respectivement le mélange de base et le mélange de bandeau, le dispositif d'alimentation étant ainsi agencé que ses portions sont sur des côtés opposés du moule, et sont adaptées à être alternativement déplacées au-dessus du moule pour une distribution séparée du mélange de base et du mélange de bandeau à l'intérieur du moule.
